# EUROPÄISCHE PATENTSCHRIFT

(11) **EP 2 126 946 B1**
(45) Veröffentlichungstag und Bekanntmachung des Hinweises auf die Patenterteilung: **14.09.2011**
(21) Anmeldenummer: 08707483.7
(22) Anmeldetag: 01.02.2008
(51) Int. Cl.: H01H 25/04

(54) **LENKSTOCKSCHALTER**
STEERING COLUMN SWITCH
COMMUTATEUR DE COLONNE DE DIRECTION

(30) Priorität: 05.02.2007 DE 102007006925
(43) Veröffentlichungstag der Anmeldung: 02.12.2009
(73) Patentinhaber: Valeo Schalter und Sensoren GmbH, 74321 Bietigheim-Bissingen (DE)
(72) Erfinder: LIPFERT, Rainer, 74076 Heilbronn (DE); SIMONIS, Karl, 75428 Illingen (DE); HASCH, Martin, 71701 Schwieberdingen (DE); BINDER, Bernd, 71679 Asperg (DE); GRÜNER, Roland, 71732 Tamm (DE)
(86) Internationale Anmeldenummer: PCT/EP2008/000797
(87) Internationale Veröffentlichungsnummer: WO 2008/095643

(56) Entgegenhaltungen:
- EP-A- 0 533 565
- EP-A- 0 826 554
- DE-A1- 4 238 070
- DE-A1- 19 544 444
- US-A- 5 742 014
- US-A- 6 006 624

## Beschreibung

Die Erfindung betrifft einen Lenkstockschalter für ein Fahrzeug, mit einem Gehäuse, mit einem im Gehäuse um wenigstens eine Schwenkachse verschwenkbar angeordneten und über einen Betätigungshebel bewegbaren Schalthebel und mit einem über den Schalthebel bewegbaren Kontaktschieber.

Zur Bewegungskopplung zwischen dem Schalthebel und dem Kontaktschieber ist es bekannt, einen beidseitig gelagerten, kniehebelartig ausgebildeten Umlenkhebel vorzusehen. Zur Lagerung des Umlenkhebels sind folglich zwei einander gegenüberliegende Achsabschnitte erforderlich, die in am Gehäuse vorgesehene, entsprechend ausgebildete Ausnehmungen eingreifen. Aufgrund der beidseitigen Lagerung ist entsprechend Bauraum zur Verfügung zu stellen.

Aus der EP 0 533 565 A1 ist bereits ein Lenkstockschalter für ein Fahrzeug gemäß dem Oberbegriff des Anspruchs 1 bekannt, bei dem zwischen Schalhebel und Kontaktschieber ein verdrehbar angeordneter Umlenkring vorgesehen ist. Der Umlenkring ist beidseitig in gehäuseseitigen Ringaufnahmen gelagert und weist einen mit der Schalthebel zusammenwirkenden Mitnahme- sowie einen mit dem Kontaktschieber zusammenwirkenden Umlenkhebel auf.

Der vorliegenden Erfindung liegt die Aufgabe zugrunde, einen Lenkstockschalter der eingangs beschriebenen Art dahingehend weiterzubilden, dass eine besonders platzsparende Lagerung des Umlenkrings in der Ringaufnahme auf einfache Art und Weise realisiert werden kann.

Diese Aufgabe ist durch einen Lenkstockschalter mit den Merkmalen des Anspruchs 1 gelöst. Ein solcher Lenkstockschalter sieht folglich vor, dass zwischen dem Schalthebel und dem Kontaktschieber ein um eine Umlenkachse verdrehbar angeordneter, ringförmig ausgebildeter und in einer gehäuseseitigen Ringaufnahme gelagerter Umlenkring vorgesehen ist, der einen mit dem Schalthebel zusammenwirkenden Mitnahmehebel und einen mit dem Kontaktschieber zusammenwirkenden Umlenkhebel aufweist. Der Umlenkring ist dabei einseitig gelagert, wobei zur einseitigen Lagerung des Umlenkrings der Umlenkring einen bezüglich der Umlenkachse in radialer Richtung überstehenden Bund aufweist, der in eine an der Ringaufnahme vorgesehene, von wenigstens einem um die Umlenkachse angeordneten Wandungsabschnitt gebildeten Nut eingreift. Der Wandungsabschnitt kann dabei vorzugsweise wenigstens abschnittsweise umlaufend sein. Durch diese Ausgestaltung der Erfindung kann eine einseitige, und damit platzsparende Lagerung des Umlenkrings in der Ringaufnahme auf einfache Art und Weise realisiert werden.

Durch das Vorsehen eines derartigen Umlenkrings wird insbesondere im Bereich der Umlenkachse aufgrund der ringförmigen Ausbildung des Umlenkrings kein Bauraum beansprucht. Um dennoch eine sichere Lagerung des Umlenkrings bereitzustellen, ist eine gehäuseseitige Ringaufnahme vorgesehen. Aufgrund der Lagerung des Umlenkrings in der Ringaufnahme wird der Umlenkring beim Verdrehen in der Ringaufnahme funktionssicher geführt. Eine pinartige Lagerung, wie sie aus dem vorbekannten Stand der Technik bekannt ist, ist nicht erforderlich.

Um eine besonders gute Lagerung des Umlenkrings in der Ringaufnahme zu erreichen, kann vorgesehen sein, dass der Durchmesser des Umlenkrings ein Drittel bis vier Drittel und insbesondere ein Eintel des Abstands der Schwenkachse zu dem Bereich des Schalthebels beträgt, der mit dem ringelementseitigen Mitnahmehebel zusammenwirkt. Ferner ist denkbar, dass der Durchmesser des Umlenkrings im Bereich von ein Drittel bis zwei Drittel und insbesondere im Bereich von einhalb des Abstandes der Schwenkachse zu dem dem Betätigungshebel abgewandten freien Ende des Schalthebels liegt. Durch die genannten Geometrien wird sichergestellt, dass der Umlenkring einen genügend großen Durchmesser vorsieht, um eine exakte Lagerung zu gewährleisten, mit der die Bewegung des Schalthebels auf den Kontaktschieber funktionssicher übertragen wird.

Die Ringaufnahme ist vorteilhafterweise an einer senkrecht zur Schwenkachse verlaufenden Seitenwand des Gehäuses vorgesehen oder wird von dieser gebildet. Hierdurch können zusätzliche Bauteile zur Realisierung der Ringaufnahme entfallen.

Ferner ist vorteilhaft, wenn das Gehäuse ein Grundteil und ein Deckelteil umfasst, wobei der Umlenkring bei abgenommenem Deckelteil in die Ringaufnahme einführbar ist. Hierdurch ergibt sich eine einfache Montage des Lenkstockschalters.

Gemäß einer weiteren Ausführungsform der Erfindung kann vorgesehen sein, dass der Mitnahmehebel und/oder der Umlenkhebel im Wesentlichen in radialer Richtung abstehend am Umlenkring angeordnet ist. Der Umlenkhebel beziehungsweise der Mitnahmehebel ist vorzugsweise einstückig an den aus Kunststoff ausgebildeten Umlenkring angeformt.

Um günstige Geometrien zu verwirklichen, kann vorgesehen sein, dass die Umlenkachse parallel zur Schwenkachse verlaufend angeordnet ist.

Ferner ist denkbar, dass der Mitnahmehebel einen parallel zur Schwenkachse verlaufenden Steg aufweist, der in eine am Schalthebel vorgesehene Stegaufnahme derart eingreift, dass beim Verschwenken des Schalthebels der Umlenkring um die Umlenkachse verdreht wird. Durch eine derartige Anordnung kann insbesondere die Mittellängsachse des Schalthebels senkrecht zur Umlenkachse verlaufend ausgebildet werden, wobei die Umlenkachse die Längsachse des Schalthebels schneiden oder auch nahe an dieser angeordnet sein kann.

Vorzugsweise sind der Steg und die mit ihm zusammenwirkende Stegaufnahme wenigstens spielfrei aufeinander abgestimmt.

Ferner kann vorgesehen sein, dass der der Umlenkachse abgewandte Abschnitt des Umlenkhebels in eine am Kontaktschieber vorgesehene Aussparung derart eingreift, dass beim Verdrehen des Umlenkrings der Kontaktschieber linear senkrecht zur Umlenkachse bewegt wird. Der in die Aussparung eingreifende Abschnitt sowie die Aussparung sind dabei vorteilhafterweise derart ausgebildet, dass kein, oder nur sehr wenig, Spiel zwischen dem Umlenkhebel und dem Kontaktschieber vorgesehen ist, so dass eine unmittelbare Bewegungskopplung zwischen dem Umlenkring und dem Kontaktschieber erreicht werden kann.

Der Kontaktschieber selbst kann vorteilhafterweise am Boden des Gehäuses und/oder an einer entsprechenden, miteinander zu verbindende Kontakte aufweisenden Leiterplatte geführt sein. Hierdurch können zusätzliche Führungsmittel für den Kontaktschieber entfallen.

Zur sicheren Bewegungsführung des Betätigungshebels, und damit des Schalthebels, kann der Schalthebel auf der dem Betätigungshebel abgewandten Seite mit einer gehäuseseitig angeordneten Rastkontur zusammenwirken.

Weitere Einzelheiten und vorteilhafte Ausgestaltungen der Erfindung sind der nachfolgenden Beschreibung zu entnehmen, anhand derer die in der Figur dargestellte Ausführungsform der Erfindung näher beschrieben und erläutert ist.

Es zeigen:
- Figur 1: einen Längsschnitt durch einen erfindungsgemäßen Lenkstockschalter;
- Figur 2: eine Draufsicht auf den Lenkstockschalter gemäß Figur 1 ohne Gehäusedeckel;
- Figur 3: den Schnitt gemäß Figur 1 ohne Schalthebel; und
- Figur 4: den Schnitt gemäß Figur 3 ohne Umlenkring.

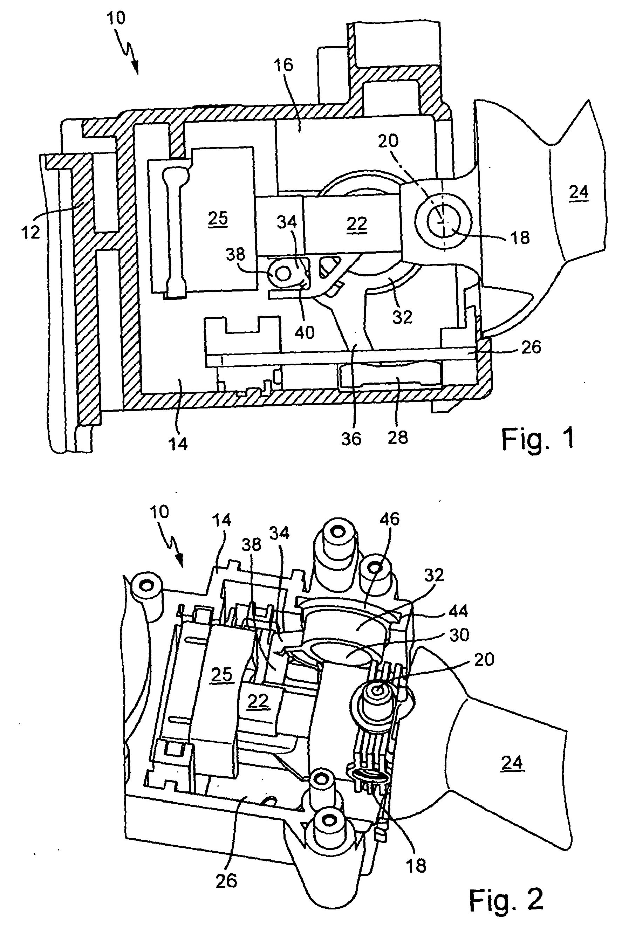

Der in den Figuren 1 bis 4 dargestellte Lenkstockschalter 10 weist ein mehrteiliges Gehäuse 12 auf, das ein Grundteil 14 und ein Deckelteil 16 umfasst. Im Gehäuse 12 ist ein um eine Schwenkachse 18 sowie um eine senkrecht dazu verlaufende Kippachse 20 betätigbarer Schalthebel 22 angeordnet. Der Schalthebel 22 wird dabei über einen mit ihm fest bewegungsgekoppelten Betätigungshebel 24 von einer dem Lenkstockschalter zu betätigenden Person in definierte Schaltstellungen gebracht. Hierfür ist im Gehäuse 12 ein Rastelement 25 vorgesehen, das eine mit dem freien Ende des Schalthebels 22 zusammenwirkende Rastkontur vorsieht.

Im Gehäuse 12 ist ferner eine elektrische Kontaktstellen aufweisende Leiterplatine 26 vorgesehen. Um in der jeweiligen Schaltstellung des Betätigungshebels 24 beziehungsweise des Schalthebels 22 entsprechende Kontakte miteinander zu verbinden, ist ebenfalls im Gehäuse 12 ein Kontaktschieber 28 vorgesehen. Zur Bewegungskopplung zwischen dem Schalthebel 22 und dem Kontaktschieber 28 ist ein um eine Umlenkachse 30 verdrehbar gelagerter Umlenkring 32 vorgesehen.

Zur Bewegungskopplung mit dem Schalthebel 22 weist der Umlenkring 32 einen Mitnahmehebel 34 auf; zur Bewegungskopplung mit dem Kontaktschieber 28 einen Umlenkhebel 36.

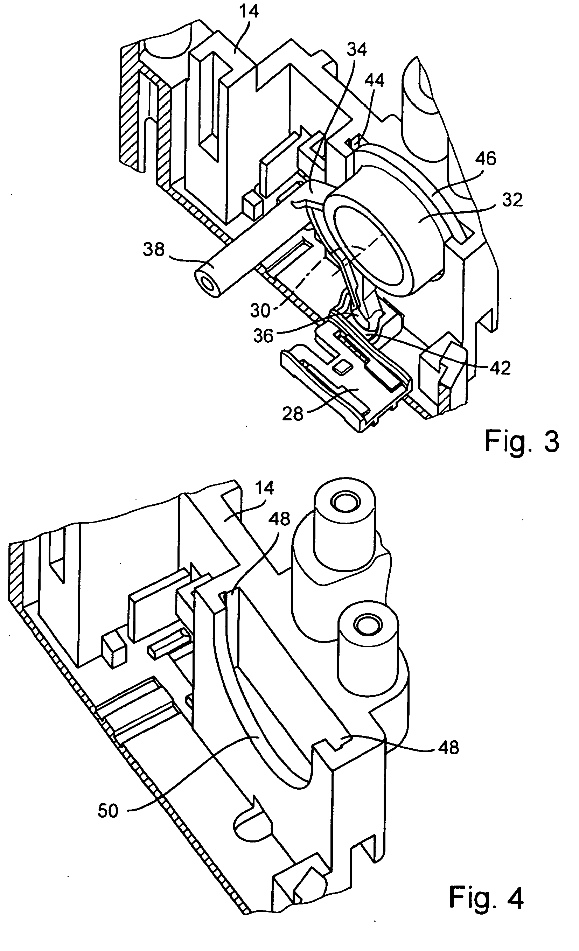

Wie aus den Figuren deutlich wird, umfasst der Mitnahmehebel 34 einen parallel zur Umlenkachse 30 und zur Schwenkachse 18 angeordneten Steg 38. Der Steg 38 greift in eine schalthebelseitig angeordnete Stegaufnahme 40 ein. Das freie Ende des Umlenkhebels 34 greift, wie insbesondere aus Figur 3 deutlich wird, in eine kontaktschieberseitig angeordnete Aussparung 42 ein. Hierdurch wird eine Zwangsbewegungskopplung zwischen der Bewegung des Schalthebels 22 und des Kontaktschiebers 28 über den Umlenkring 32 bereitgestellt.

Der Umlenkring 32 ist einer gehäuseseitig vorgesehenen Ringaufnahme 34 drehbar gelagert. Wie insbesondere aus den Figuren 2, 3 und 4 deutlich wird, bei denen das Deckelteil 16 nicht auf den Grundteil 14 angeordnet ist, wird die Ringaufnahme 44 von einer Seitenwandung des Grundteils 14 gebildet. Der Umlenkring seinerseits ist einseitig gelagert, wobei der Umlenkring 32 einen bezüglich der Umlenkachse 30 in radialer Richtung überstehenden, umlaufenden Bund 46 aufweist. Dieser Bund 46 greift in eine, wie insbesondere aus Figur 4 deutlich wird, umlaufende Nut 48 ein, die einerseits von der Gehäusewandung und andererseits von einem um die Umlenkachse 30 angeordneten Wandungsabschnitt 50 gebildet wird. Hierdurch kann eine sichere Lagerung des Umlenkrings 32 in axialer und radialer Richtung erreicht werden. Bei abgenommenem Deckelteil 16 kann der Umlenkring 32, beziehungsweise der Bund 46, in die Ringaufnahme 44 eingeführt werden. Bei aufgesetztem Deckelteil 16, wie es in der Figur 1 gezeigt ist, ist dann der Umlenkring 32 am Gehäuse 12 funktionssicher und positionsgenau festgesetzt.

Wie aus den Figuren 1 bis 3 deutlich wird, entspricht der Durchmesser des Umlenkrings 32 cirka dem Abstand der Schwenkachse 18 zur Stegaufnahme 40 beziehungsweise beträgt cirka die Hälfte des Abstandes von der Schwenkachse 18 zum freien, mit der Rastkontur zusammenwirkenden Ende des Schalthebels 22. Aufgrund eines derart groß dimensionierten Umlenkringes kann eine exakte Lagerung des Umlenkringes 32 in der Ringaufnahme 44 gewährleistet werden.

## Patentansprüche

1. Lenkstockschalter (10) für ein Fahrzeug, mit einem Gehäuse (12), mit einem im Gehäuse (12) um wenigstens eine Schwenkachse (18) verschwenkbar angeordneten und über einen Betätigungshebel (24) bewegbaren Schalthebel (22) und mit einem über den Schalthebel (22) bewegbaren Kontaktschieber (28), wobei zwischen dem Schalthebel (22) und dem Kontaktschieber (28) ein um eine Umlenkachse (30) verdrehbar angeordneter, ringförmig ausgebildeter und in einer gehäuseseitigen Ringaufnahme (44) gelagerter Umlenkring (32) vorgesehen ist, der einen mit dem Schalthebel (22) zusammenwirkenden Mitnahmehebel (34) und einen mit dem Kontaktschieber (28) zusammenwirkenden Umlenkhebel (36) aufweist, **dadurch gekennzeichnet, dass** der Umlenkring (32) zur einseitigen Lagerung einen bezüglich der Umlenkachse (30) in radialer Richtung überstehenden Bund (46) aufweist, der in eine an der Ringaufnahme (44) vorgesehene, von wenigstens einem um die Umlenkachse (30) angeordneten Wandungsabschnitt (50) gebildeten Nut (48) eingreift.

2. Lenkstockschalter (10) nach Anspruch 1, **dadurch gekennzeichnet, dass** der Durchmesser des Umlenkrings (32) im Bereich von 1/3 bis 2/3 und insbesondere im Bereich von 1/2 des Abstandes der Schwenkachse (18) zu dem dem Betätigungshebel abgewandten freien Ende des Schalthebels (22) liegt.

3. Lenkstockschalter (10) nach Anspruch 1, oder 2, **dadurch gekennzeichnet, dass** die Ringaufnahme (44) an einer senkrecht zur Schwenkachse (18) verlaufenden Seitenwand des Gehäuses (12) vorgesehen oder von dieser gebildet ist.

4. Lenkstockschalter (10) nach wenigstens einem der vorhergehenden Ansprüche, **dadurch gekennzeichnet, dass** das Gehäuse (12) ein Grundteil (14) und ein Deckelteil (16) umfasst, wobei der Umlenkring (32) bei abgenommenem Deckelteil (16) in die Ringaufnahme (44) einführbar ist.

5. Lenkstockschalter (10) nach wenigstens einem der vorhergehenden Ansprüche, **dadurch gekennzeichnet, dass** der Mitnahmehebel (34) und/oder der Umlenkhebel (36) im Wesentlichen in radialer Richtung abstehend am Umlenkring (32) angeordnet ist.

6. Lenkstockschalter (10) nach wenigstens einem der vorhergehenden Ansprüche, **dadurch gekennzeichnet, dass** die Umlenkachse (30) parallel zur Schwenkachse (18) verlaufend angeordnet ist.

7. Lenkstockschalter (10) nach wenigstens einem der vorhergehenden Ansprüche, **dadurch gekennzeichnet, dass** der Mitnahmehebel (34) einen parallel zur Schwenkachse (18) verlaufenden Steg (38) aufweist, der in eine am Schalthebel (22) vorgesehene Stegaufnahme (40) derart eingreift, dass beim Verschwenken des Schalthebels (20) der Umlenkring (32) um die Umlenkachse (30) verdreht wird.

8. Lenkstockschalter (10) nach wenigstens einem der vorhergehenden Ansprüche, **dadurch gekennzeichnet, dass** der der Umlenkachse (30) abgewandte Abschnitt des Umlenkhebels (36) in eine am Kontaktschieber (28) vorgesehene Aussparung (42) derart eingreift, dass beim Verdrehen des Umlenkrings (32) der Kontaktschieber (28) linear senkrecht zur Umlenkachse (30) bewegt wird.

9. Lenkstockschalter (10) nach wenigstens einem der vorhergehenden Ansprüche, **dadurch gekennzeichnet, dass** der Kontaktschieber (28) am Boden des Gehäuses (12) geführt wird.

10. Lenkstockschalter (10) nach wenigstens einem der vorhergehenden Ansprüche, **dadurch gekennzeichnet, dass** der Schalthebel (22) auf der dem Betätigungshebel (24) abgewandten Seite mit einer Rastkontur (25) zusammenwirkt.

## Claims

1. Steering column switch (10) for a vehicle, with a housing (12), with a switching lever (22) which is arranged pivotably about at least one pivot axis (18) in the housing (12) and is movable via an actuating lever (24), and with a contact slide (28) which is movable via the switching lever (22), wherein a deflecting ring (32), which is arranged rotatably about a deflecting axis (30), is of annular design and is moulted in a ring receptacle (44) on the housing side, is provided between the switching lever (22) and the contact slide (28), said deflecting ring having a driving lever (34) which interacts with the switching lever (22) and a deflecting lever (36) which interacts with the contact slide (28), **characterized in that**, for mounting on one side, the deflecting ring (32) has a collar (46) which protrudes in the radial direction with respect to the deflecting axis (30) and engages in a groove (48) which is provided on the ring receptacle (44) and is formed by at least one wall section (50) arranged about the deflecting axis (30).

2. Steering column switch (10) according to Claim 1, **characterized in that** the diameter of the deflecting ring (32) is in the region of 1/3 to 2/3 and in particular in the region of 1/2 of the distance of the pivot axis (18) from that free end of the switching lever (22) which is remote from the actuating lever.

3. Steering column switch (10) according to Claim 1 or 2, **characterized in that** the ring receptacle (44) is provided on a side wall of the housing (12), the side wall running perpendicularly to the pivot axis (18), or is formed by said side wall.

4. Steeping column switch (10) according to at least one of the preceding claims, **characterised in that** the housing (12) comprises a basic part (14) and a cover part (16), the deflecting ring (32) being insertable into the ring receptacle (44) when the cover part (16) is removed.

5. Steering column switch (10) according to at least one of the preceding claims, **characterised in that** the driving lever (34) and/or the deflecting lever (36) are/is arranged on the deflecting ring (32) in a manner protruding essentially in the radial direction.

6. Steering column switch (10) according to at least one of the preceding claims, characterizes in that the defecting axis (30) is arranged running parallel to the pivot axis (18).

7. Steering column switch (10) according at least one of the preceding claims, **characterized** on that the driving lever (34) has a web (38) which runs parallel to the pivot axis (18) and engages in a web receptacle (40), which is provided on the switching lever (22), in such a manner that, when the switching lever (22) is pivoted, the deflecting ring (32) is rotated about the deflecting axis (30).

8. Steering column switch (10) according to at least one of the preceding claims, **characterized in that that** section of the deflecting lever (36) which is remote from the deflecting axis (30) engages in a cutout (43), which is provided of the contact slide (28), in such a manner that, when the deflecting ring (32) is rotated, the contact slide (28) is moved linearly perpendicularly to the deflecting axis (30).

9. Steering column switch (10) according to at least one of the preceding claims, **characterized in that** the contact slide (28) is guided on the base of the housing (12).

10. Steering column switch (1.0) according so at least one or the preceding claims, **characterized in that** the switching lever (22) interacts with a latching contour (25) on the side remote from the actuating lever (24).

## Revendications

1. Commutateur de colonne de direction (10) pour un véhicule, comprenant un boîtier (12), un levier de sélection (22) disposé de manière à pouvoir pivoter dans le boîtier (12) autour d'au moins un axe de pivotement (18) et déplaçable par le biais d'un levier d'actionnement (24) et un tiroir de contact (28) déplaçable par le biais du levier de sélection (22), une bague de déviation (32) disposée de manière à pouvoir tourner autour d'un axe de déviation (30), de réalisation annulaire et montée dans un logement de bague (44) du côté du boîtier étant prévue entre le levier de sélection (22) et le tiroir de contact (28), laquelle bague de déviation (32) présente un levier d'entraînement (34) coopérant avec le levier de sélection (22) et un levier de déviation (36) coopérant avec le tiroir de contact (28), **caractérisé en ce que** la bague de déviation (32) présente, en vue de son support d'un côté, un épaulement (46) dépassant dans la direction radiale par rapport à l'axe de déviation (30), qui vient en prise dans une rainure (48) prévue sur le logement de bague (44) et formée par au moins une portion de paroi (50) disposée autour de l'axe de déviation (30).

2. Commutateur de colonne de direction (10) selon la revendication 1, **caractérisé en ce que** le diamètre de la bague de déviation (32) est compris dans une plage de 1/3 à 2/3 et notamment dans une plage de 1/2 de la distance de l'axe de pivotement (18) à l'extrémité libre du levier de sélection (22) opposée au levier d'actionnement.

3. Commutateur de colonne de direction (10) selon la revendication 1 ou 2, **caractérisé en ce que** le logement de bague (44) est prévu sur une paroi latérale du boîtier (12) s'étendant perpendiculairement à l'axe de pivotement (18) ou est forme par celle-ci.

4. Commutateur de colonne due direction (10) selon au moins l'une quelconque des revendications précédentes, **caractérisé en ce que** le boîtier (12) comprend une partie de base (1A) et une partie de couvercle (16), la bague de déviation (32) pouvant être introduite dans le logement de bague (44) lorsque la partie de couvercle (16) est enlevée.

5. Commutateur de colonne de direction (10) selon au moins l'une quelconque des revendications précédentes, **caractérisé en ce que** le levier d'entraînement (34) et/ou le levier de déviation (36) sont disposés sur la bague de déviation (32) de manière à faire saillie essentiellement dans la direction radiale.

6. Commutateur de colonne de direction (10) selon au moins une quelconque des revendications précédentes, **caractérisé en ce que** l'axe de déviation (30) est disposé de manière à s'étendre parallèlement à l'axe de pivotement (18).

7. Commutateur de colonne de direction (10) selon au moins l'une quelconque des revendications précédentes, **caractérisé en ce que** le levier d'entraînement (34) présente une nervure (38) s'étendant parallèlement à l'axe de pivotement (18), laquelle vient en prise dans un logement de nervure (40) prévu sur le levier de sélection (22) de telle sorte que lors du pivotement du levier de sélection il la bague de déviation 132) soit tournée autour de l'axe de déviation (30).

8. Commutateur de colonne de direction (10) selon au moins une quelconque des revendications précédentes, **caractérisé en ce que** la portion du levier de déviation (36) opposée à l'axe de déviation (30) vient en prise dans un évidement (42) prévu sur le tiroir de contact (28) de telle sorte que lors de la rotation de la bague de déviation (32), le tiroir de contact (28) soit déplacé linéairement perpendiculairement à l'axe de déviation (30).

9. Commutateur de colonne de direction (10) selon au moins l'une quelconque des revendications précédentes, **caractérisé en ce que** le tiroir de contact (28) est guidé sur le fond du boîtier (12).

10. Commutateur de colonne de direction (10) selon au moins l'une quelconque des revendications précédentes, **caractérisé en ce que** le levier de sélection (22) coopère avec un conteur d'encliquetage (35) du côté opposé au levier d'actionnement (24).
